# DEMANDE DE BREVET EUROPEEN

(11) **EP 2 538 053 A1**
(43) Date de publication de la demande: **26.12.2012**
(21) Numéro de dépôt: 12169290.9
(22) Date de dépôt: 24.05.2012
(51) Int. Cl.: F02B 23/06, F02B 23/10, F02F 3/26, F02F 3/28, F02B 75/12

(54) **Piston pour chambre de combustion de moteur à combustion interne**

(30) Priorité: 24.06.2011 FR 1155639
(71) Demandeur: PEUGEOT CITROËN AUTOMOBILES SA, 78140 Velizy-Villacoublay (FR)
(72) Inventeur: Briard, Jean Luc, 75013 PARIS (FR); Sauvage, Jean Marie, 78125 GAZERAN (FR)

(57) **Abrégé**

L'invention a pour objet un piston pour chambre de combustion de moteur à combustion interne, ledit piston comportant une cavité en forme de bol pour la combustion du carburant. La cavité est délimitée latéralement au moins en partie par un muret M comprenant :
- deux zones latérales dont la section dans un plan x,y perpendiculaire à l'axe z du piston est en forme de lobe, et qui sont reliées l'une à l'autre par
- une zone de fond dont la section dans le plan x,y perpendiculaire à l'axe z du piston est sensiblement rectiligne et/ou présente au moins en partie une courbure inverse de celle des lobes des zones latérales.

## Description

La présente invention concerne un piston pour chambre de combustion de moteur à combustion interne, et plus particulièrement à injection directe. Elle concerne aussi le moteur à combustion interne lui même, de type essence ou Diesel, de véhicule, en particulier de véhicule automobile, comportant un tel piston, et elle concerne aussi tout véhicule intégrant un tel moteur.

Les moteurs à combustion interne comportent de manière connue un carter dans lequel sont disposés des cylindres, des pistons venant coulissant par des mouvements de va-et-vient dans ces cylindres et une culasse venant fermer l'extrémité supérieure du carter.

La culasse comprend pour chaque cylindre des conduits d'admission et d'échappement obturés sélectivement par respectivement au moins une soupape d'admission et au moins une soupape d'échappement.

Un injecteur de carburant est également logé dans la culasse en regard de chacun des cylindres, cet injecteur débouchant dans la partie inférieure de la culasse en regard du cylindre, et peut être disposé approximativement au centre de celui-ci et à l'aplomb de la tête de piston en position haute, ou être déporté latéralement par rapport à celle-ci.

Les pistons sont conformés pour présenter sur leur surface supérieure orientée vers la culasse une cavité centrale en forme de bol profilé, entourée d'une zone dite de chasse. Pour chaque cylindre, la chambre de combustion est ainsi formée par la surface de la culasse en regard du cylindre, la paroi supérieure cylindrique du carter orientée vers la culasse et la surface supérieure du piston en position haute. De la forme de la chambre de combustion dépend la qualité du mélange carburant-air, et donc la qualité de la combustion. Cette forme est donc particulièrement étudiée, et prend en compte de nombreux paramètres et critères comme la forme et l'orientation du jet de carburant émis par l'injecteur vers le bol du piston, le taux de compression recherché, ou le volume mort du piston.

De nombreuses formes de tête de piston ont été proposées pour en augmenter les performances. Dans le cas des pistons pour moteur essence, la forme du bol de piston est généralement une cavité de type cylindrique centrée sur l'axe du piston. Dans le cas de pistons plus spécifiquement adaptés aux moteurs Diesel, les formes de bol peuvent être plus élaborées, et comporter, par exemple, une protubérance centrale faisant face à l'injecteur, un exemple en est donné dans le brevet WO 2005/078270.

Le but de l'invention est d'améliorer encore la conception de têtes de piston, notamment mais non exclusivement dans le cas de pistons coopérant avec des injecteurs disposés sur le côté du piston et non à l'aplomb de celui-ci. Plus particulièrement, le but de l'invention est d'améliorer les performances des têtes de piston de moteur, notamment essence, à injecteur disposé sur le côté, notamment en vue d'améliorer l'homogénéité du mélange air/carburant dans la chambre de combustion et/ou d'améliorer la convergence de ce mélange vers la bougie d'allumage.

L'invention a pour objet un piston pour chambre de combustion de moteur à combustion interne, ledit piston comportant une cavité en forme de bol pour la combustion du carburant. Cette cavité est délimitée latéralement au moins en partie par un muret comprenant :

- deux zones latérales dont la section dans un plan perpendiculaire à l'axe du piston est en forme de lobe, et qui sont reliées l'une à l'autre par

- une zone de fond dont la section dans le plan perpendiculaire à l'axe du piston est sensiblement rectiligne et/ou présente au moins en partie une courbure inverse de celle des lobes des zones latérales.

Cette forme de bol est particulièrement avantageuse, dans la mesure où le muret à lobes selon l'invention permet de canaliser au mieux le jet de carburant, issu d'un injecteur plus particulièrement disposé latéralement par rapport à la tête de piston : les deux lobes voisins définissent dans le bol deux volumes qui s'intersectent. Le jet, approximativement conique, de carburant émis par l'injecteur vient impacter le bol selon une direction appropriée en direction du muret, de sorte que ce jet tend à se partager en deux flux qui suivent la courbure des deux zones de muret en forme de lobes pour converger à nouveau l'un vers l'autre dans la zone d'intersection des deux volumes délimités par ces lobes, au voisinage de la zone de fond du muret. Ce double mouvement vient favoriser à la fois le brassage du carburant, et l'homogénéisation du mélange carburant-air qui s'opère dans le bol lors de l'injection de carburant, et la convergence du mélange en question dans une zone concentrée bien définie du bol, à l'aplomb de laquelle on peut disposer précisément la bougie d'allumage, dans le cas d'un moteur à essence, de façon à favoriser l'allumage du mélange par l'étincelle produite par la bougie. La présence de la zone de fond qui relie les deux lobes est avantageuse, car si les deux lobes se rejoignaient directement, leur intersection créerait une pointe dans le contour du bol susceptible de devenir un point chaud lors de la combustion dans la chambre de combustion.

Selon un mode de réalisation, dans la section dans le plan perpendiculaire à l'axe du piston d'au moins une des zones latérales, la tangente au lobe de ladite zone latérale à son point de liaison avec la zone de fond définit avec la perpendiculaire à celle-ci, dans ledit plan, un angle aigu, notamment de plus de 0° et de moins de 90°, notamment d'au plus 80°, de préférence compris entre 10° et 45 °.

Les sections des zones latérales dans le plan perpendiculaire à l'axe du piston sont de préférence symétriques l'une de l'autre par rapport à un plan médian.

De préférence, le rayon de chacune des zones latérales en forme de lobe mesuré dans un plan perpendiculaire à l'axe du piston est d'au moins 1 mm. Ce rayon minimal assure une courbure suffisante des lobes pour assurer la convergence des flux de carburant canalisés par ces zones latérales.

De préférence, les deux zones latérales du muret sont symétriques par rapport à un axe, notamment par rapport à l'axe d'injection. On comprend ici par axe d'injection l'axe moyen de projection de carburant injecté par l'injecteur en direction du bol du piston, en considérant, ce qui est une approximation, que le jet émis par l'injecteur est strictement conique, et présente donc une symétrie centrale par rapport audit axe. (Le jet de carburant a en effet une forme qui s'approche d'un cône et qui va dépendre notamment de la forme de la buse de l'injecteur). On s'assure ainsi que le jet de carburant va frapper le bol de façon à être amené à se partager en deux flux de débit sensiblement identiques qui vont longer chacun des lobes pour se rejoindre. A noter que l'on peut aussi envisager des lobes non symétriques, ou symétriques mais selon un autre axe. Dans ce cas, le flux peut se partager en deux flux d'importances différentes.

A noter également que ces notions de « flux » utilisés dans le présent texte sont à prendre comme des globalisations, des « moyennes », des vues d'ensemble de l'écoulement considéré du carburant dans le bol. En effet, l'impact du jet de carburant sur les parois du bol du piston, puis la géométrie du bol en question, viennent créer un/des flux perturbés/tourbillonnaires, avec, pour chaque flux considéré, des zones de coeur et des zones périphériques dans le flux qui peuvent avoir des caractéristiques différentes les unes des autres.

De préférence, le muret présente, au moins dans la zone de fond, une courbure cylindrique ou parabolique, notamment une courbure cylindrique présentant un rayon d'au moins 1 mm. Il s'agit ici de la courbure du muret par rapport à un plan passant par l'axe du piston. Une courbure suffisamment prononcée, notamment cylindrique, assure en effet que ce muret soit configuré comme une rampe qui va guider le flux de carburant auquel vient s'incorporer de l'air pour pouvoir concentrer, en final, le mélange air-carburant dans la zone souhaitée, au plus près de la bougie d'allumage dans le cas d'un moteur à essence (appelé aussi moteur à allumage commandé). Avantageusement, les zones latérales du muret, et de préférence l'ensemble du muret, présentent une telle courbure, qui peut alors être constante tout au long du muret ou de la portion de muret considérée, ou variable et, par exemple, plus accentué dans la zone de fond du muret.

De préférence, le muret, au moins dans sa zone de fond, présente une inclinaison constante ou variable sur la longueur du muret, et qui est positive ou négative par rapport à l'axe du piston (une inclinaison positive correspondant à une configuration de muret de type divergent, qui va faire diverger le flux de carburant en direction de l'étincelle de la bougie d'allumage, alors qu'une inclinaison négative correspond à une configuration de muret de type convergent, qui va faire converger le carburant en direction de l'étincelle) . Elle est notamment d'au plus 30°, de préférence d'au plus 15°, en valeurs absolues. Cette inclinaison est mesurée par la tangente dans la section droite de la paroi du muret par rapport à l'axe du piston. Cette valeur peut être positive ou négative, c'est-à-dire correspondre à un angle ouvert ou fermé. En combinaison avec la courbure décrite plus haut, le choix de cette inclinaison permet de définir et d'ajuster selon les besoins la façon dont le muret va guider le flux de carburant / de mélange air-carburant, par exemple régler leurs trajectoires, leurs vitesses, la création d'un régime plus ou moins tourbillonnaire, la concentration dans la zone ad hoc pour allumage...

Selon une variante, la hauteur du muret évolue, notamment croît, des bords externes des zones latérales vers la zone de fond. Le choix de la hauteur du muret et de son éventuelle progressivité le long du muret va dépendre de différentes considérations, outre celles déjà évoquées, notamment un choix de volume mort en position haute de piston ou de contrainte de compression.

De préférence, le bol du piston est délimité par le muret, une zone dépourvue de muret formant bord avant, et un fond incliné par rapport à un plan perpendiculaire à l'axe du piston qui relie ledit bord avant au muret. Ce fond de bol peut être plan ou incurvé, et il est préférable de prévoir une connexion arrondie entre fond de bol et muret. Le fond de bol participe au guidage du jet de carburant vers les zones latérales du muret, la zone d'impact du jet de carburant sur le bol du piston pouvant être réglée pour atteindre au moins en partie le muret et/ou le fond de bol, qui se trouve « avant » le muret en considérant la direction de projection du jet de carburant.

De préférence, l'angle mesuré au fond du bol, de préférence à l'aplomb de la zone destinée à recevoir la bougie d'allumage, mesuré selon un plan passant par l'axe du piston, est compris entre 70 et 110°, notamment entre 80 et 100°.

L'invention a également pour objet un moteur à combustion interne, qui comprend au moins un piston tel que décrit précédemment, ledit piston coulissant dans un cylindre et coopérant avec :
- un injecteur disposé latéralement par rapport au bol dudit piston de façon à projeter le carburant en direction du bol, notamment en direction des volumes délimités latéralement par les lobes des parties latérales du muret dudit bol
- une bougie d'allumage disposée à l'aplomb du bol dudit piston, notamment à l'aplomb de la zone du bol à l'intersection des volumes délimités par lesdits deux lobes.

L'invention a également pour objet un véhicule, en particulier un véhicule automobile, qui comporte un moteur à combustion interne tel que décrit plus haut.

D'autres avantages et caractéristiques de l'invention apparaîtront dans la description qui suit d'un exemple de réalisation, non limitatif, accompagné de dessins dans lesquels :

la figure 1 représente en vue cavalière un piston coopérant avec une bougie d'allumage et un injecteur d'un moteur à essence selon l'invention,

la figure 2 isole et agrandit la tête de piston selon la vue cavalière de la figure 1,

la figure 3 représente une vue en élévation de la tête de piston selon la figure 2,

les figures 4, 5 et 6 représentent des sections de la tête de piston selon les figures précédentes, selon les plans A'A', B'B' et D'D' de la figure 3.

Toutes ces figures sont volontairement très schématiques et ne sont pas nécessairement à l'échelle pour en simplifier la lecture. Seuls les composants du moteur intéressant plus particulièrement l'invention sont en outre représentés. Les mêmes références désignent les mêmes composants d'une figure à l'autre.

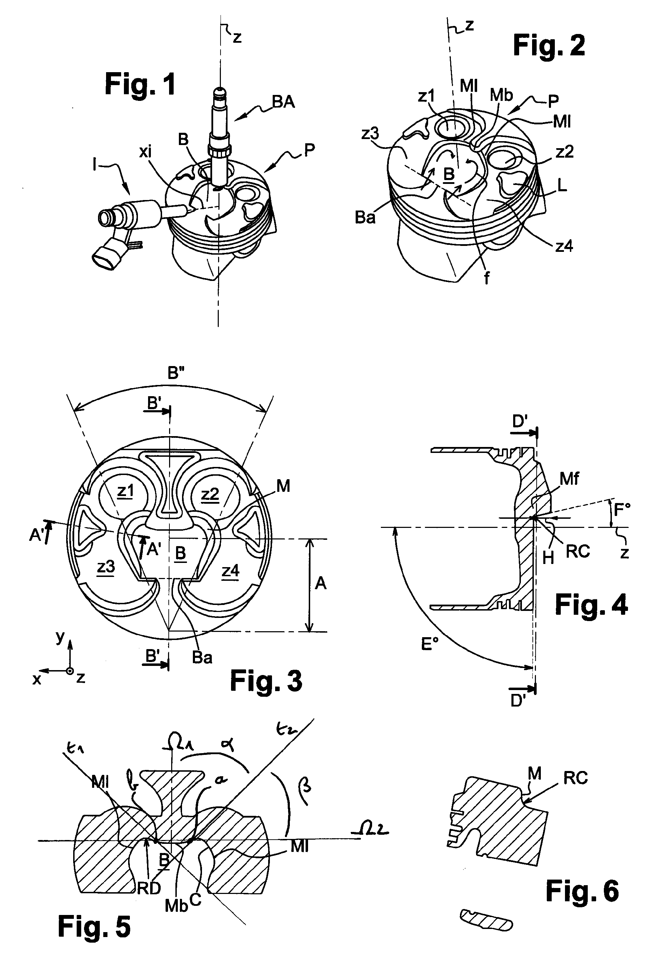

La figure 1 représente la partie supérieure, encore appelée tête, d'un piston P selon l'invention d'un moteur à combustion interne à essence. Le moteur comprend un carter muni d'au moins un cylindre (non représenté) chacun pourvu d'un alésage et fermé à son extrémité supérieure par une culasse (non représentée). Le piston P coulisse, de façon connue, dans l'alésage du cylindre par un mouvement de va-et-vient selon son axe z. En position haute, la tête du piston P contribue à délimiter une chambre de combustion pour le mélange air-carburant, avec le haut de l'alésage et la surface en regard de la culasse. La tête du piston est pourvue d'une cavité, appelée ci-après bol B, qui est apte à contenir un certain volume de carburant. Dans l'exemple représenté, l'injecteur I qui projette le carburant en direction du bol B est disposé latéralement par rapport au piston (alors que dans une configuration habituelle d'un piston de moteur essence, l'injecteur est disposé au dessus de la tête de piston et centré par rapport à celle-ci, avec un axe de projection proche de l'axe du piston). L'inclinaison peut être adaptée en fonction de certains paramètres, comme le type de buse équipant l'injecteur, la distance entre buse d'injecteur et bol, la forme du bol, le type de carburant .... Ici, l'injecteur projette le carburant sous une forme sensiblement conique, le cône venant frapper le bol B du piston dans une zone détaillée plus loin. En assimilant le jet de carburant projeté par l'injecteur à un cône parfait, l'axe d'injection XI est incliné d'un angle d'environ 0 à 90°, notamment 60 à 90° ou 50 à 80°, par rapport à l'axe z du piston P. On comprend que du type de jet et de la forme du bol de piston vont dépendre, notamment, la façon dont le carburant va se distribuer dans le bol, sa vitesse, le type de mouvement qu'il va adopter et, de fait, la façon dont il va pouvoir incorporer de façon aussi homogène que possible de l'air avant que le mélange air-carburant ne soit allumé par la bougie d'allumage BA disposée à l'aplomb de la tête de piston P, au-dessus du bol B.

La figure 2 est un agrandissement de la tête de piston de la figure 1: Le bol B présente un profil qui rappelle celui d'une couronne C. Ses caractéristiques seront décrites ci- après également à l'aide des figures 3 à 6 qui représentent des sections de la tête de piston selon différents plans.

la partie périphérique de la tête de piston P comporte quatre zones z1 à z4 qui sont destinées à coopérer avec des zones de formes complémentaires de la culasse associée, dont deux sous forme d'une cavité sensiblement cylindrique avec un fond légèrement bombé z1, z2, et symétriques par rapport au plan B'B' selon la figure 3, et deux autres z3,z4 présentant également une forme en creux et symétriques par rapport au même plan. Cette forme a, en creux, très approximativement la forme d'un crochet. Les quatre cavités sont reliées les unes aux autres par des zones sensiblement plates, elles ne participent pas directement à la définition de la chambre de combustion, à la différence du bol B décrit plus en détails ci-dessous et auquel l'invention s'intéresse plus particulièrement. Leurs formes peuvent varier, notamment selon la géométrie de la culasse associée.

Le bol B est encadré par ces quatre cavités z1, à z4, et il est globalement centré par rapport à l'axe z du piston P. Il présente un bord avant Ba qui se raccorde sans décrochement, ou avec un décrochement faible, avec les parties en forme de crochet des zones z3 et z4 décrites plus haut et une zone plate les reliant. Des extrémités de ce bord avant Ba part un muret M. Ce muret se décompose en deux murets latéraux MI reliés par un muret de fond Mf. Les murets latéraux ont chacun la forme d'un lobe et le muret de fond présente une inflexion dans sa partie centrale, à savoir une légère courbure inverse de celles des lobes. Le fond du bol relie le bord avant au muret par une pente régulière selon une inclinaison généralement comprise entre 10 et -10°, et ici d'environ 5°, par rapport à l'axe z du piston P, et une inclinaison d'environ 15° ici par rapport à l'axe d'injection XI. La forme de ce muret M et de la cavité qu'il délimite en association avec le bord avant Ba sont symétriques par rapport à l'angle d'inclinaison XI de la buse de l'injecteur I.

Comme représenté plus particulièrement à la figure 3 (la cote A' positionnant l'injecteur 1 par rapport au centre du piston P), le muret a ainsi la forme d'une couronne C, et le rayon RD de chacun des lobes délimités par les murets latéraux MI est d'au moins 1 mm, et, dans cet exemple, d'environ 2 mm. Le choix de ce rayon RD conditionne, au moins en partie, comme détaillé plus tard, la façon dont le flux va se répartir/se partager dans le bol B.

Le muret M présente par ailleurs, comme représenté à la figure 6, une courbure RC sensiblement cylindrique et d'au moins 1 mm sur toute sa longueur, courbure dans cet exemple d'environ 2 mm.

Comme représenté à la figure 4, le muret M présente une inclinaison F°, mesurée par rapport à l'axe z du piston, qui est ici constante sur toute la longueur du muret et d'environ 15°. Cet angle est donc dans cet exemple ouvert, mais il peut aussi être fermé (c'est-à-dire négatif selon le sens trigonométrique) et varier le long du muret. Le rayon RC est ainsi le rayon qui va commander au moins en partie la réorientation du flux de carburant pour que celui-ci prenne une direction déterminée par le choix de l'angle F°, afin de diriger le flux vers la bougie d'allumage BA.

La hauteur H du muret mesurée en projection sur l'axe z du piston, comme on le voit notamment des figures 2 et 4, varie d'une valeur nulle sur les extrêmes des murets latéraux MI à une valeur maximale au niveau du muret du fond Mf, suivant en cela la profondeur croissante de la cavité du bord avant Ba vers le muret du fond Mf. Pour donner un ordre de grandeur, cette hauteur H peut ainsi varier de 0 jusqu'à 20 mm (ou même bien davantage), de préférence de façon régulière. Enfin, l'angle E mesuré au fond du bol et représenté en figure 4 est ici d'environ 90° par rapport à l'axe z du piston.

Si l'on considère à nouveau la figure 2, les flèches f symbolisent, bien sûr de façon très schématique, la façon dont le flux conique de carburant projeté par l'injecteur I se déplace dans le bol B : la figure 3 représente l'angle B" représentant la divergence du flux conique de carburant émis par l'injecteur I, cet angle étant ici d'environ 40°, et étant généralement choisi entre 30 et 70°. Au moins une partie du flux impacte la cavité du bol, entre le bord avant Ba et le mur du fond Mf et éventuellement aussi, au moins en partie, les parois des murets latéraux MI. La forme du muret M et la pente de la cavité conduisent le flux à se partager en deux flux longeant chacun un muret latéral MI en forme de lobe en direction du muret du fond Mf. Les deux flux convergent à nouveau l'un vers l'autre dans la zone d'intersection des deux volumes de cavité délimités par les lobes, la géométrie du bol, et plus particulièrement le choix de l'angle RD, favorisant la convergence de ces deux flux l'un vers l'autre dans la zone où les deux volumes délimités par les lobes s'intersectent, à l'aplomb de la bougie d'allumage BA. De fait, ce brassage des deux flux, en générant des tourbillons, des perturbations dans l'écoulement du flux de carburant dans le bol, favorise l'incorporation homogène d'air dans le carburant, et la rampe constitué par le muret de forme très spécifique a le double effet d'augmente la vitesse du mélange air-carburant et de le faire converger de façon précise vers la bougie, favorisant ainsi son allumage. La présence du muret de fond qui fait la liaison entre les deux lobes permet de générer les tourbillons de carburant propices une bonne homogénéité du flux qui en résulte, sans risquer de générer de point chaud entre les deux lobes.

La figure 5 montre que, dans le plan (x,y) les lobes sont reliés au muret du fond par des points d'intersection a et b, de façon à ce que les lobes présentent un sommet avant de rejoindre ledit muret du fond. Si les lobes sont tronqués, c'est donc sur leur flanc interne et « au-delà » de leur sommet. La figure représente les tangentes t1 et t2 des lobes par rapport au muret du fond à leurs points d'intersection respectifs a et b. En considérant le muret comme rectiligne (soit parce qu'il est effectivement rectiligne, soit parce qu'il présente une courbure inversée de celle des lobes, et qu'on trace une ligne droite Ω2 virtuelle rejoignant les points a et b), les tangentes t1 et t2 font avec cette ligne Ω2 un angle β aigu, notamment compris entre plus de 0 ° et moins de 90°, notamment entre 5° et 80°, de préférence entre 10° et 45°. Exprimé différemment, ces tangentes t1 et t2 présentent un angle α aigu , par exemple compris entre plus de 0°et moins de 90°, notamment entre 5° et 80°, de préférence entre 10 et 45 °(cet angle α est complémentaire à 90° de l'angle β) avec la droite Ω1 perpendiculaire à la ligne Ω2). Les lobes sont, dans le plan (x,y), symétriques par rapport au plan π médian, qui passe par la droite Ω1 et qui est perpendiculaire à la droite Ω2. A noter que ce plan partage également symétriquement le muret de fond. De préférence, quand le muret du fond présente, comme montré à la figure 5, une courbure inverse de celle des lobes qui l'entourent, cette courbure inverse est moins prononcée, et même nettement moins prononcée, que celle des lobes. Une courbure trop importante conduirait à créer un sommet trop prononcé au milieu de ce muret qui pourrait favoriser la création d'un point chaud.

D'autres variantes de bol peuvent être envisagées ans le cadre de l'invention. Ainsi, notamment, le muret du fond peut ne pas présenter d'inflexion et être plat (selon une section dans le plan (xy), la courbure des lobes peut être plus ou moins accentuée, la pente de la cavité plus ou moins accentuée, on peut modifier l'angle d'injection XI ou la forme du jet de carburant émis par l'injecteur I, afin, par exemple, de déplacer la zone d'impact carburant/bol. Le volume délimité par le bol B peut être ajusté en fonction des besoins.

On voit que ce type de bol est particulièrement adapté à des pistons à injecteur latéral. Il peut s'appliquer aux moteurs à essence ou aux moteurs Diesel. Pour un point de fonctionnement donné, il permet d'améliorer la combustion du mélange air-carburant, donc d'optimiser/réduire la consommation de carburant.

## Revendications

1. Piston (P) pour chambre de combustion de moteur à combustion interne, ledit piston (P) comportant une cavité en forme de bol (B) pour la combustion du carburant, **caractérisé en ce que** ladite cavité est délimitée latéralement au moins en partie par un muret (M) comprenant :
- deux zones latérales (MI) dont la section dans un plan (x,y) perpendiculaire à l'axe (z) du piston est en forme de lobe, et qui sont reliées l'une à l'autre par
- une zone de fond (Mf) dont la section dans le plan (x,y) perpendiculaire à l'axe (z) du piston est sensiblement rectiligne et/ou présente au moins en partie une courbure inverse de celle des lobes des zones latérales (MI).

2. Piston (P) selon la revendication précédente, **caractérisé en ce que**, dans la section dans le plan (x,y) perpendiculaire à l'axe (z) du piston d'au moins une des zones latérales (MI), la tangente au lobe de ladite zone latérale à son point de liaison (a,b) avec la zone de fond (MF) définit avec la perpendiculaire à celle-ci (Ω1), dans le plan (x,y), un angle (α) aigu, notamment de plus de 0° et de moins de 90° notamment d'au plus 80°, de préférence compris entre 10° et 45°.

3. Piston (P) selon l'une des revendications précédentes, **caractérisé en ce que** les sections des zones latérales (MI) dans le plan (x,y) perpendiculaire à l'axe (z) du piston sont symétriques l'une de l'autre par rapport à un plan médian (π).

4. Piston (P) selon l'une des revendications précédentes, **caractérisé en ce que** le rayon (RD) de chacune des zones latérales (MI) en forme de lobe mesuré dans un plan (x,y) perpendiculaire à l'axe (z) du piston est d'au moins 1 mm.

5. Piston (P) selon l'une des revendications précédentes, **caractérisé en ce que** les deux zones latérales (MI) du muret sont symétriques par rapport à un axe, notamment par rapport à l'axe d'injection (XI).

6. Piston (P) selon l'une des revendications précédentes, **caractérisé en ce que** le muret (M) présente, au moins dans la zone de fond (Mf), une courbure (RC) cylindrique ou parabolique, notamment une courbure cylindrique (RC) présentant un rayon d'au moins 1 mm.

7. Piston (P) selon l'une des revendications précédentes, **caractérisé en ce que** le muret (M), au moins dans sa zone de fond (Mf), présente une inclinaison (F°) constante ou variable sur la longueur du muret, et qui est positive ou négative par rapport à l'axe du piston (z), et notamment d'au plus 30°, de préférence d'au plus 15°, en valeurs absolues.

8. Piston (P) selon l'une des revendications précédentes, **caractérisé en ce que** la hauteur (H) du mur (M) évolue, notamment croît, des bords externes des zones latérales (MI) vers la zone de fond (Mf).

9. Piston (P) selon l'une des revendications précédentes, **caractérisé en ce que** le bol (B) est délimité par le muret (M), une zone (Ba) dépourvue de muret formant bord avant et un fond incliné par rapport à un plan (x,y) perpendiculaire à l'axe (z) du piston qui relie ledit bord avant (Ba) au muret (M).

10. Piston (P) selon l'une des revendications précédentes, **caractérisé en ce que** l'angle (E) mesuré au fond du bol (B), de préférence à l'aplomb de la zone destinée à recevoir la bougie d'allumage, mesuré selon un plan passant par l'axe (z) du piston, est compris entre 70 et 110°, notamment entre 80 et 100°.

11. Moteur à combustion interne, **caractérisé en ce qu'**il comprend au moins un piston (P) selon l'une des revendications précédentes, ledit piston coulissant dans un cylindre et coopérant avec
- un injecteur (I) disposé latéralement par rapport au bol (B) dudit piston de façon à projeter le carburant en direction du bol, notamment en direction des volumes délimités latéralement par les lobes des parties latérales (MI) du muret (M) dudit bol,
- une bougie d'allumage (BA) disposée à l'aplomb du bol (B) dudit piston, notamment à l'aplomb de la zone du bol à l'intersection des volumes délimités par lesdits deux lobes.

12. Véhicule, notamment véhicule automobile, **caractérisé en ce qu'**il comprend un moteur selon la revendication précédente.
